# EUROPEAN PATENT SPECIFICATION

(11) **EP 3 448 100 B1**
(45) Date of publication and mention of the grant of the patent: **09.09.2020**
(21) Application number: 16901237.4
(22) Date of filing: 10.05.2016
(51) Int. Cl.: H04W 72/04

(54) **UPLINK INFORMATION TRANSMISSION METHOD, BASE STATION, AND USER EQUIPMENT**
VERFAHREN ZUR ÜBERTRAGUNG VON UPLINK-INFORMATIONEN, BASISSTATION UND BENUTZERGERÄT
PROCÉDÉ DE TRANSMISSION D'INFORMATIONS DE LIAISON MONTANTE, STATION DE BASE, ET ÉQUIPEMENT D'UTILISATEUR

(43) Date of publication of application: 27.02.2019
(73) Proprietor: Huawei Technologies Co., Ltd., Longgang District Shenzhen, Guangdong 518129 (CN)
(72) Inventor: HUANG, Qufang, Shenzhen Guangdong 518129 (CN)
(74) Representative: Gill Jennings & Every LLP
(86) International application number: PCT/CN2016/081555
(87) International publication number: WO 2017/193282

(56) References cited:
- EP-A1- 3 244 666
- CN-A- 104 735 672
- CN-A- 105 376 812
- CN-A- 105 490 789
- US-A1- 2015 092 750
- US-A1- 2016 044 655

## Description

### TECHNICAL FIELD

Embodiments of the present invention relate to data transmission technologies, and in particular, to an uplink information transmission method, a base station, and user equipment.

### BACKGROUND

To alleviate insufficiency of spectrum resources, the 3rd Generation Partnership Project (3rd Generation Partnership Project, 3GPP) uses unlicensed spectrums to provide wireless communication services. Depending on whether a licensed spectrum cell and an unlicensed spectrum cell are deployed in a co-site manner, there are two deployment manners: Manner 1: Co-site deployment of a licensed spectrum cell and an unlicensed spectrum cell. In this case, for a specific base station, cells of a base station include a licensed spectrum cell and an unlicensed spectrum cell. Manner 2: Non co-site deployment of a licensed spectrum cell and an unlicensed spectrum cell. In this case, at least one base station exists, and cells of the base station are all unlicensed spectrum cells.

In a carrier aggregation (Carrier Aggregation, CA) technology, user equipment (User Equipment, UE) simultaneously uses a plurality of cells of the base station to transmit data, so as to improve a data transmission speed. In the plurality of cells, one is a primary cell (Primary Cell, PCell) and the rest are secondary cells (Secondary Cell, SCell). Generally, CA may be classified into intra-base-station cell aggregation, inter-base-station cell aggregation, and the like. The intra-base-station cell aggregation means that, for one UE, to-be-aggregated serving cells belong to a same base station. The inter-base-station cell aggregation means that, for one UE, to-be-aggregated serving cells belong to a plurality of different base stations

(current standard protocols support only two base stations). A serving base station in which the PCell is located is a master eNB (Master eNB, MeNB), and other serving base stations are secondary eNBs (Secondary eNB, SeNB). In one or more SCells of a secondary base station, one cell is a primary secondary cell (Primary Secondary Cell, PSCell). Generally, uplink information includes uplink control information and uplink data information. The SCell is configured to transmit the uplink data information. In addition to the uplink data information, the PCell transmits the uplink control information for other SCells that transmit the uplink data information.

When unlicensed spectrum cells are deployed in the manner 1, in an uplink information transmission process, an unlicensed spectrum cell in an aggregated serving cell serves as an SCell, and transmits only uplink data information of UE. All uplink control information of the UE is transmitted by using a licensed spectrum cell PCell. If the PCell is a narrowband cell, a limited capacity of the narrowband cell may lead to a limited capacity of the PCell, and the PCell transmits limited uplink control information. This further affects transmission of the uplink data information by the SCell, and results in poor reliability of uplink information transmission. When unlicensed spectrum cells are deployed in the manner 2, all cells of one base station are unlicensed spectrum cells. At present, no uplink information transmission method is proposed for such a scenario. Therefore, in the CA technology, how to transmit uplink information is actually a problem to be urgently resolved in the industry.

EP3244666 describes grouping, by a base station, N serving cells into K cell groups, where N is an integer greater than zero, and K is an integer less than N; sending, by the base station, a cell grouping message to UE, where the cell grouping message is used to indicate that the N serving cells are grouped into the K cell groups; and communicating, by the base station, with the UE according to the K cell groups

Document US 2016/044655 A1 discloses another example of the prior art.

### SUMMARY

Embodiments of the present invention provide an uplink information transmission method, a system and user equipment, as recited in the appended claims, to distribute uplink information to a plurality of cells in a cell group for transmission, thereby implementing high-reliability transmission of the uplink information.

There is provided an uplink information transmission method, and the method is described from a perspective of user equipment. In the method, user equipment receives configuration information that is about a cell group and that is sent by a base station, and sends uplink information based on the configuration information by using the cell group, to distribute the uplink information to a plurality of cells in the cell group for transmission, thereby implementing high-reliability transmission of the uplink information. In addition, applying the method to a scenario of co-site deployment of an unlicensed cell and a licensed cell can resolve a problem of a limited PCell capacity; applying the method to a scenario of non co-site deployment of an unlicensed cell and a licensed cell can implement uplink information transmission in such a scenario.

In a possible implementation, for a specific cell in the cell group, uplink information of the cell is distributed to the cell or another cell, so that uplink information of the entire cell group is distributed to a plurality of cells in the cell group for transmission. This resolves the problem of a limited PCell capacity. In this case:

In a possible implementation, a second cell is an unlicensed spectrum cell, and before the sending, by the UE, uplink information of a first cell to the base station by using the second cell, the method further includes: determining, by the UE, that the second cell is an available unlicensed spectrum cell.

In a possible implementation, a second cell is an unlicensed spectrum cell, and before the sending, by the UE, uplink information of a first cell to the base station by using a second cell, the method further includes: determining, by the UE, that the second cell is an unavailable unlicensed spectrum cell.

When the second cell is an unlicensed spectrum cell, the sending, by the UE, uplink information of a first cell to the base station by using the second cell includes: starting, by the UE, a window timer at a time point of sending the uplink information of the first cell; detecting, by the UE during running of the window timer, that the second cell is available; and sending, by the UE, the uplink information of the first cell to the base station by using the second cell. In this way, when uplink information is transmitted by using an unlicensed spectrum cell, when the unlicensed spectrum cell is detected to be unavailable, the transmission is stopped or a window timer is started. When the unlicensed spectrum cell is detected, in the window timer, to be available, the uplink information transmission continues. Therefore, reliability of uplink information transmission by using an unlicensed spectrum cell is improved.

In a possible implementation, the sending, by the UE, uplink information of a first cell to the base station by using the second cell includes: determining, by the UE, that there is an available alternative cell in at least one alternative cell of the second cell; and sending, by the UE, the uplink information of the first cell to the base station by using the available alternative cell of the second cell. By configuring a plurality of alternative cells for an unlicensed spectrum cell, reliability of uplink information transmission is improved.

In a possible implementation, the method further includes: determining, by the UE, a radio link monitoring RLM group; sequentially performing, by the UE, RLM on cells in the RLM cell group; determining, by the UE based on the RLM, that the cells in the RLM group are all unavailable; and starting, by the UE, an RLM timer, and detecting, during running of the RLM timer, whether there is an available unlicensed spectrum cell in the RLM cell group; and stopping the RLM timer if there is an available unlicensed spectrum cell in the RLM cell group, or if there is no available unlicensed spectrum cell in the RLM cell group, determining, after the RLM timer expires, that a radio link failure RLF occurs in all unlicensed spectrum cells in the RLM cell group. In the method, radio signals of a plurality of cells in the RLM group are detected, and the RLF is only considered to occur when signals of all cells are unavailable and the situation has lasted for a period of time. This increases an RLF determining threshold, improves availability of unlicensed spectrum cells, and resolves a problem of RLF misjudgment caused by unavailability of the unlicensed spectrum cells.

In a possible implementation, the method further includes: determining, by the UE, an uplink time reference group; and determining, by the UE, whether there is an available unlicensed spectrum cell in the uplink time reference group; and if there is an available unlicensed spectrum cell in the uplink time reference group, selecting one from the available unlicensed spectrum cell as an uplink time reference, or if there is no available unlicensed spectrum cell in the uplink reference time group, starting, by the UE, an uplink transmit timer, and detecting, during running of the uplink transmit timer, whether there is an available unlicensed spectrum cell in the uplink time reference group; and if there is an available unlicensed spectrum cell in the uplink time reference group, stopping the uplink transmit timer, or if there is no available unlicensed spectrum cell in the uplink time reference group, determining, after the uplink transmit timer expires, that the UE and the base station are asynchronous. In the method, when all cells in the uplink time reference group are unavailable and after the timer expires, the UE determines that the UE and the base station are asynchronous, and further abandons sending the uplink information. This resolves a problem that the UE sends the uplink time reference because of unavailability of the unlicensed spectrum cells.

In a possible implementation, the uplink time reference group further includes a licensed spectrum cell, and the method further includes: receiving, by the UE, a time difference sent by the base station, where the time difference indicates a subframe boundary difference between the licensed spectrum cell and each unlicensed spectrum cell in the uplink time reference group; and after the determining, by the UE after the uplink transmit timer expires, that the UE and the base station are asynchronous, the method further includes: determining, by the UE, an uplink transmit time reference based on the licensed spectrum cell and the time difference. In the method, the uplink time reference group further includes the licensed spectrum cell. When all cells in the uplink time reference group are unavailable and the timer expires, the UE uses the licensed spectrum cell as the time reference, and uses the "time difference" together with a downlink subframe boundary of the licensed spectrum cell as the uplink transmit time reference. This resolves the problem that the UE sends the uplink time reference because of unavailability of the unlicensed spectrum cells.

In a possible implementation, the method further includes: determining, by the UE, a third cell from the cell group based on a Single Cell Point To Multipoint SC-PTM priority, where the third cell is a cell with a highest SC-PTM priority in the cell group, or the third cell is a cell with a lowest SC-PTM priority in the cell group; and receiving, by the UE in one multicast control channel MCCH period by using the third cell, a single cell multicast control channel SC-MCCH message sent by the base station. In the method, a plurality of unlicensed spectrum cells are bound together to collaboratively send an SC-MCCH or an SC-MTCH, thereby improving a success rate of transmission.

In a possible implementation, after the receiving, by the UE in one multicast control channel MCCH period by using the third cell, a single cell multicast control channel SC-MCCH message sent by the base station, the method further includes: determining, by the UE based on the SC-MCCH, an SC-MTCH window for sending SC-MTCH information by the base station; determining, by the UE, a fourth cell from the cell group based on the SC-PTM priority; and receiving, by the UE by using the fourth cell, the SC-MTCH information sent by the base station in the SC-MTCH.

In a possible implementation, before the sending, by the UE, uplink information to the base station by using the cell group, the method further includes: receiving, by the UE by using a fifth cell in the cell group, downlink data sent by the base station, where the fifth cell is an unlicensed spectrum cell; and determining, by the UE, a sixth cell from the cell group, where the sixth group is a cell that occurs earliest within a hybrid automatic repeat request window HARQ windows time of the downlink data and that has an available physical uplink shared channel PUCCH opportunity; and the sending, by the UE, uplink information to the base station by using the cell group includes: sending, by the UE, a HARQ of the downlink data to the base station by using the PUCCH opportunity of the sixth cell. In the method, the UE can send the HARQ by selecting one cell from the cell group. Compared with the prior-art practice of sending the HARQ only by using the PUCCH of the PCell, this improves a probability of feeding back the HARQ by the UE.

In a possible implementation, before the sending, by the UE, uplink information to the base station by using the cell group, the method further includes:
determining, by the UE, a channel state indication CSI resource.

In a possible implementation, the determining, by the UE, a CSI resource includes:
receiving, by the UE, first CSI resource indication information sent by the base station, where the first CSI resource indication information indicates a time position of the CSI resource; and
reserving, by the UE based on the first CSI resource indication information, the time position in each cell of the cell group as a position of the CSI resource.

In a possible implementation, the determining, by the UE, a CSI resource includes:
receiving, by the UE, second CSI resource indication information sent by the base station, where the second CSI resource indication information indicates a time position of the CSI resource and a seventh cell; and
reserving, by the UE based on the second indication information, the time position in the seventh cell as a position of the CSI resource.

There is also provided an uplink information transmission method and the method is described from a perspective of a base station. In this method, a base station configures a cell group for UE, and sends configuration information of the cell group to the UE, so that the UE sends uplink information by using the cell group, to distribute the uplink information to a plurality of cells in the cell group for transmission, thereby implementing high-reliability transmission of the uplink information. In addition, applying the method to a scenario of co-site deployment of an unlicensed cell and a licensed cell can resolve a problem of a limited PCell capacity; applying the method to a scenario of non co-site deployment of an unlicensed cell and a licensed cell can implement uplink information transmission in such a scenario.

In a possible implementation, the uplink information includes uplink information of a first cell, and the receiving, by the base station, uplink information sent by the UE by using the cell group includes: receiving, by the base station, the uplink information of the first cell sent by the UE by using the first cell; or receiving, by the base station, the uplink information of the first cell sent by the UE by using a second cell; where the first cell is a cell in the cell group, and the second cell is another cell different from the first cell in the cell group.

In a possible implementation, the second cell is an unlicensed spectrum cell, and the receiving, by the base station, the uplink information of the first cell sent by the UE by using a second cell includes:
receiving, by the base station, the uplink information of the first cell sent by the UE by using the second cell after the UE determines that the second cell is an available unlicensed spectrum cell.

In a possible implementation, the second cell is an unlicensed spectrum cell, and the receiving, by the base station, the uplink information of the first cell sent by the UE by using a second cell includes:
receiving, by the base station, the uplink information of the first cell sent by the UE by using an available alternative cell of the second cell, where the available alternative cell is determined by the UE from at least one alternative cell of the second cell after the UE determines that the second cell is an unavailable unlicensed spectrum cell.

In a possible implementation, the method further includes:
sending, by the base station in one multicast control channel MCCH period, downlink control information to the UE by using a third cell and a single cell multicast control channel SC-MCCH, where the third cell is determined by the UE from the cell group based on an SC-PTM priority, and the third cell is a cell with a highest SC-PTM priority in the cell group, or the third cell is a cell with a lowest SC-PTM priority in the cell group.

In a possible implementation, the method further includes:
sending, by the base station by using a fourth cell, downlink data information to the UE in a single cell multicast traffic channel SC-MTCH window by using an SC-MTCH, where the fourth cell is determined by the UE from the cell group based on the SC-PTM priority.

In a possible implementation, before the receiving, by the base station, uplink information sent by the UE by using the cell group, the method further includes:
sending, by the base station, downlink data to the UE by using a fifth cell in the cell group; and
the receiving, by the base station, uplink information sent by the UE by using the cell group includes:
   receiving, by the base station, a hybrid automatic repeat request HARQ of the downlink data that is sent by the UE to the base station by using a PUCCH opportunity of a sixth cell, where the sixth cell is determined by the UE from the cell group, and the sixth cell is a cell that occurs earliest within a hybrid automatic repeat request window HARQ windows time of the downlink data and that has an available physical uplink shared channel PUCCH opportunity.

In a possible implementation, before the receiving, by the base station, uplink information sent by the UE by using the cell group, the method further includes:
sending, by the base station, first CSI resource indication information to the UE, where the first CSI resource indication information indicates a time position of the CSI resource.

In a possible implementation, before the receiving, by the base station, uplink information sent by the UE by using the cell group, the method further includes:
sending, by the base station, second CSI resource indication information to the UE, where the second CSI resource indication information indicates a time position of the CSI resource and a seventh cell.

There is also provided user equipment, including:
a receiving module, configured to receive configuration information sent by a base station, where the configuration information indicates a cell group configured for the UE by the base station; and
a sending module, configured to send uplink information to the base station by using the cell group.

In a possible implementation, the uplink information includes uplink information of a first cell; and
the sending module is specifically configured to send the uplink information of the first cell to the base station by using the first cell;
or,
the sending module is specifically configured to send the uplink information of the first cell to the base station by using a second cell; where
the first cell is a cell in the cell group, and the second cell is another cell different from the first cell in the cell group.

In a possible implementation, the second cell is an unlicensed spectrum cell; and
the user equipment further includes:
a processing module, configured to determine, before the sending module sends the uplink information of the first cell to the base station by using the second cell, that the second cell is an available unlicensed spectrum cell.

In a possible implementation, the second cell is an unlicensed spectrum cell; and
the user equipment further includes:
a processing module, configured to determine, before the sending module sends the uplink information of the first cell to the base station by using the second cell, that the second cell is an unavailable unlicensed spectrum cell.

In a possible implementation, the sending module is configured to send the uplink information of the first cell to the base station by using the second cell when the processing module detects, during running of a window timer that is started at a time point of sending the uplink information of the first cell, that the second cell is available.

In a possible implementation, the sending module is configured to send, when the processing module determines that there is an available alternative cell in at least one alternative cell of the second cell, the uplink information of the first cell to the base station by using the available alternative cell of the second cell.

In a possible implementation, the processing module is further configured to: determine a radio link monitoring RLM group, and sequentially perform RLM on cells in the RLM cell group; determine, based on the RLM, that the cells in the RLM group are all unavailable; start an RLM timer; detect, during running of the RLM timer, whether there is an available unlicensed spectrum cell in the RLM cell group; and stop the RLM timer if there is an available unlicensed spectrum cell in the RLM cell group; or if there is no available unlicensed spectrum cell in the RLM cell group, determine, after the RLM timer expires, that a radio link failure RLF occurs in all unlicensed spectrum cells in the RLM cell group.

In a possible implementation, the processing module is further configured to: determine an uplink time reference group; determine whether there is an available unlicensed spectrum cell in the uplink time reference group; and if there is an available unlicensed spectrum cell in the uplink time reference group, select one from the available unlicensed spectrum cell as an uplink time reference; or if there is no available unlicensed spectrum cell in the uplink time reference group, start an uplink transmit timer, and detect, during running of the uplink transmit timer, whether there is an available unlicensed spectrum cell in the uplink time reference group, and if there is an available unlicensed spectrum cell in the uplink time reference group, stop the uplink transmit timer, or if there is no available unlicensed spectrum cell in the uplink time reference group, determine, after the uplink transmit timer expires, that the UE and the base station are asynchronous.

In a possible implementation, the uplink time reference group further includes a licensed spectrum cell, and the receiving module is further configured to: receive a time difference sent by the base station, where the time difference indicates a subframe boundary difference between the licensed spectrum cell and each unlicensed spectrum cell in the uplink time reference group; and determine an uplink transmit time reference based on the licensed spectrum cell and the time difference after it is determined, after the uplink transmit timer expires, that the UE and the base station are asynchronous.

In a possible implementation, the processing module is further configured to determine, based on a Single Cell Point To Multipoint SC-PTM priority, a third cell from the cell group, where the third cell is a cell with a highest SC-PTM priority in the cell group, or the third cell is a cell with a lowest SC-PTM priority in the cell group; and
the receiving module is configured to receive, in one multicast control channel MCCH period by using the third cell, a single cell multicast control channel SC-MCCH message sent by the base station.

In a possible implementation, the processing module is further configured to: after the receiving module receives, in one multicast control channel MCCH period by using the third cell, a single cell multicast control channel SC-MCCH message sent by the base station, determine, based on the SC-MCCH, an SC-MTCH window for sending SC-MTCH information by the base station, and determine, based on the SC-PTM priority, a fourth cell from the cell group; and
the receiving module is further configured to receive, by using the fourth cell, the SC-MTCH information sent by the base station in the SC-MTCH.

In a possible implementation, the receiving module is further configured to: before the sending module sends the uplink information to the base station by using the cell group, receive, by using a fifth cell in the cell group, downlink data sent by the base station, where the fifth cell is an unlicensed spectrum cell;
the processing module is further configured to determine a sixth cell from the cell group, where the sixth group is a cell that occurs earliest within a hybrid automatic repeat request window HARQ windows time and that has an available physical uplink shared channel PUCCH opportunity; and
the sending module is further configured to send a HARQ of the downlink data to the base station by using the PUCCH opportunity of the sixth cell.

In a possible implementation, the processing module is further configured to: before the sending module sends the uplink information to the base station by using the cell group, determine a channel state indication CSI resource.

In a possible implementation, the receiving module is further configured to receive first CSI resource indication information sent by the base station, where the first CSI resource indication information indicates a time position of the CSI resource; and
the receiving module is specifically configured to reserve, based on the first CSI resource indication information, the time position in each cell of the cell group as a position of the CSI resource.

In a possible implementation, the receiving module is further configured to receive second CSI resource indication information sent by the base station, where the second CSI resource indication information indicates a time position of the CSI resource and a seventh cell; and
the processing module is further configured to reserve, based on the second indication information, the time position in the seventh cell as a position of the CSI resource.

There is also provided a base station, including:
a processing module, configured to configure a cell group for user equipment UE;
a sending module, configured to send configuration information to the UE, where the configuration information indicates the cell group; and
a receiving module, configured to receive uplink information sent by the UE by using the cell group.

In a possible implementation, the uplink information includes uplink information of a first cell; and
the receiving module is specifically configured to receive the uplink information of the first cell sent by the UE by using the first cell;
or,
the receiving module is specifically configured to receive the uplink information of the first cell sent by the UE by using a second cell; where
the first cell is a cell in the cell group, and the second cell is another cell different from the first cell in the cell group.

In a possible implementation, the second cell is an unlicensed spectrum cell; and
the receiving module is specifically configured to receive the uplink information of the first cell sent by using the second cell after the UE determines that the second cell is an available unlicensed spectrum cell.

In a possible implementation, the second cell is an unlicensed spectrum cell; and
the receiving module is specifically configured to receive the uplink information of the first cell sent by the UE by using an available alternative cell of the second cell, where the available alternative cell is determined by the UE from at least one alternative cell of the second cell after the UE determines that the second cell is an unavailable unlicensed spectrum cell.

In a possible implementation, the sending module is further configured to send, in one multicast control channel MCCH period, downlink control information to the UE by using a third cell and a single cell multicast control channel SC-MCCH, where the third cell is determined by the UE from the cell group based on an SC-PTM priority, and the third cell is a cell with a highest SC-PTM priority in the cell group, or the third cell is a cell with a lowest SC-PTM priority in the cell group.

In a possible implementation, the sending module is further configured to send, by using a fourth cell, downlink data information to the UE in a single cell multicast traffic channel SC-MTCH window by using an SC-MTCH, where the fourth cell is determined by the UE from the cell group based on the SC-PTM priority.

In a possible implementation, the sending module is further configured to: before the receiving module receives the uplink information sent by the UE by using the cell group, send downlink data to the UE by using a fifth cell in the cell group; and
the receiving module is configured to receive a hybrid automatic repeat request HARQ of the downlink data that is sent by the UE to the base station by using a PUCCH opportunity of a sixth cell, where the sixth cell is determined by the UE from the cell group, and the sixth cell is a cell that occurs earliest within a hybrid automatic repeat request window HARQ windows time of the downlink data and that has an available physical uplink shared channel PUCCH opportunity.

In a possible implementation, the sending module further sends, before the receiving module receives the uplink information sent by the UE by using the cell group, first CSI resource indication information to the UE, where the first CSI resource indication information indicates a time position of the CSI resource.

In a possible implementation, the sending module further sends, before the receiving module receives the uplink information sent by the UE by using the cell group, second CSI resource indication information to the UE, where the second CSI resource indication information indicates a time position of the CSI resource and a seventh cell.

There is also provided user equipment, including: a processor, a memory, a communications interface, and a system bus, where the memory and the communications interface are connected to and communicate with the processor by using the system bus, the memory is configured to store a computer-executable instruction, the communications interface is configured to communicate with another device, and the processor is configured to run the computer-executable instruction, to cause the user equipment to perform the steps of the foregoing method applied to user equipment.

There is also provided a base station, including: a processor, a memory, a communications interface, and a system bus, where the memory and the communications interface are connected to and communicate with the processor by using the system bus, the memory is configured to store a computer-executable instruction, the communications interface is configured to communicate with another device, and the processor is configured to run the computer-executable instruction, to cause the base station to perform the steps of the foregoing method applied to a base station.

According to the uplink information transmission method, the apparatus, and the user equipment provided ,the base station configures the cell group for the UE, and sends configuration information of the cell group to the UE, so that the UE sends the uplink information by using the cell group, to distribute the uplink information to a plurality of cells in the cell group for transmission, thereby implementing high-reliability transmission of the uplink information. In addition, applying the method to a scenario of co-site deployment of an unlicensed cell and a licensed cell can resolve a problem of a limited PCell capacity; applying the method to a scenario of non co-site deployment of an unlicensed cell and a licensed cell can implement uplink information transmission in such a scenario.

### BRIEF DESCRIPTION OF DRAWINGS

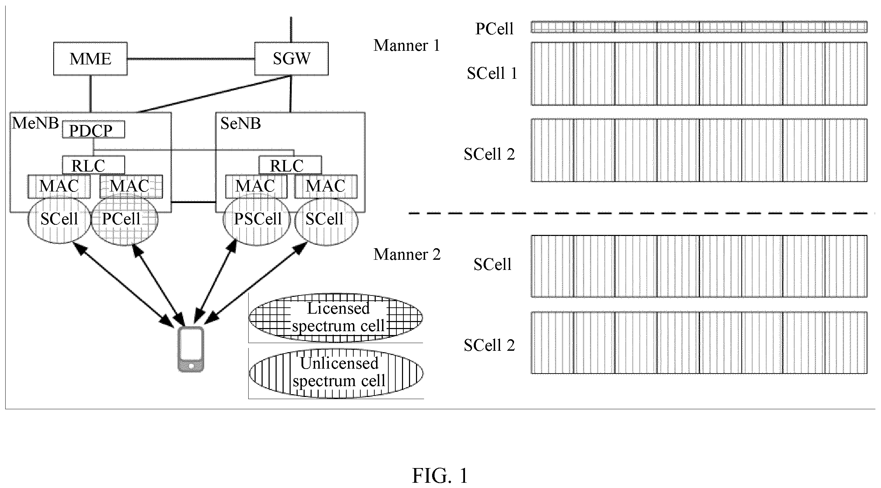

FIG. 1 is a schematic diagram of a network architecture to which an uplink information transmission method according to the present invention is applicable;

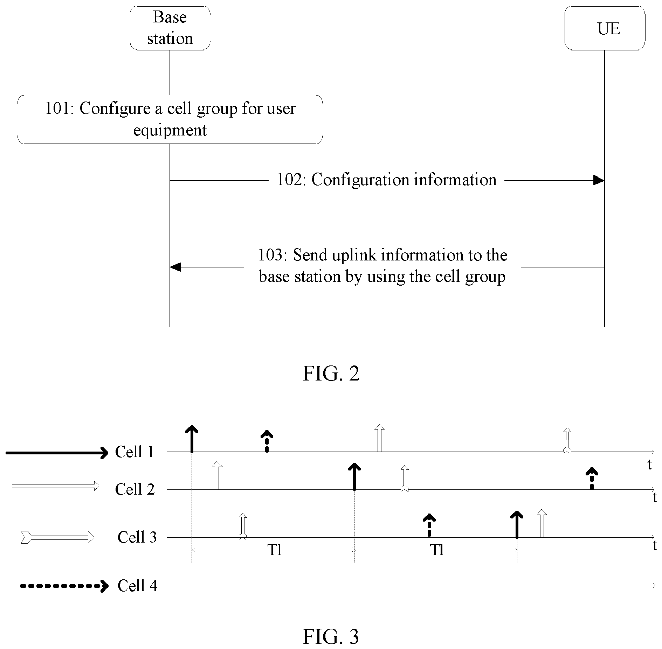

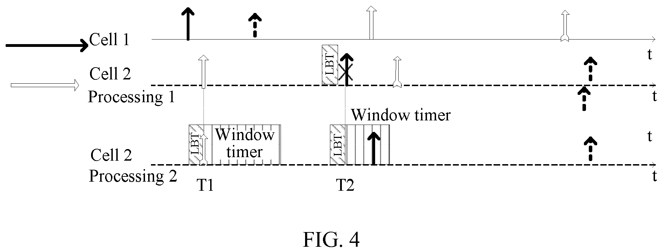

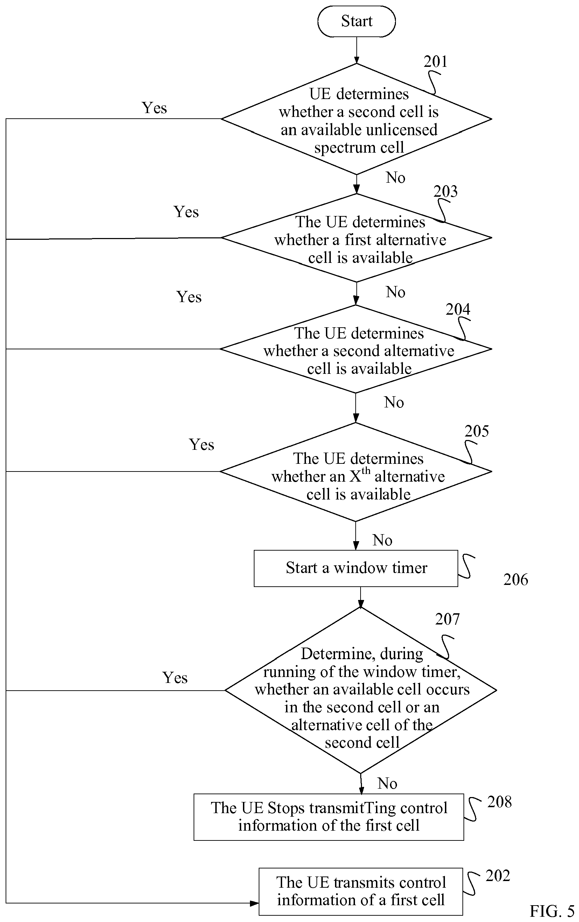

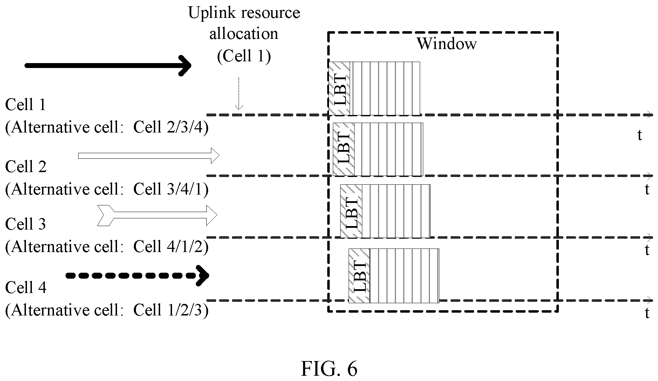

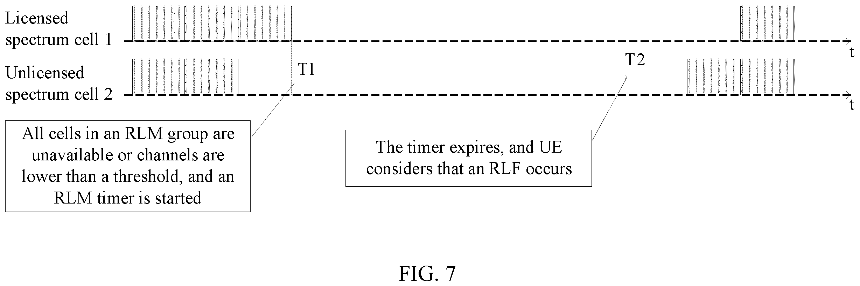

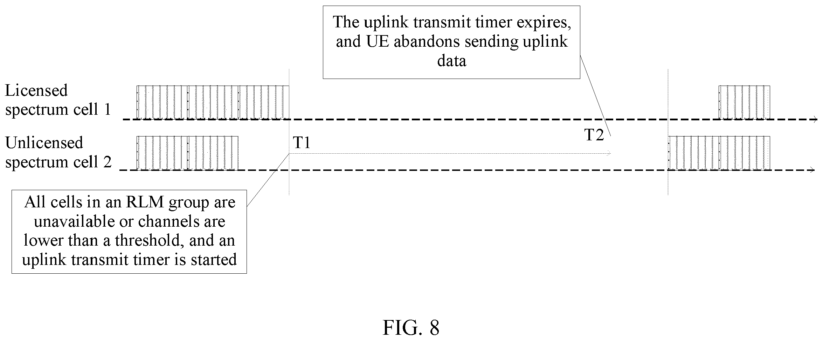

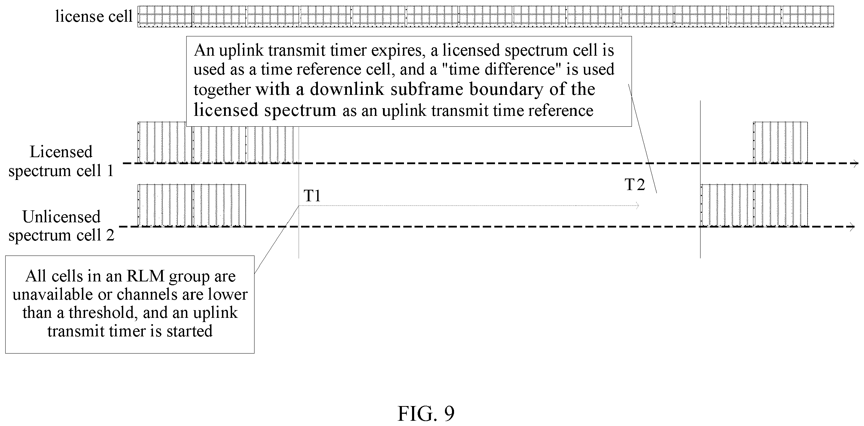

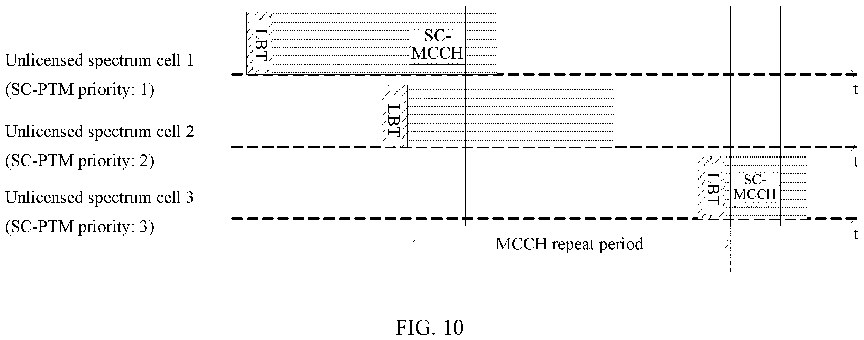

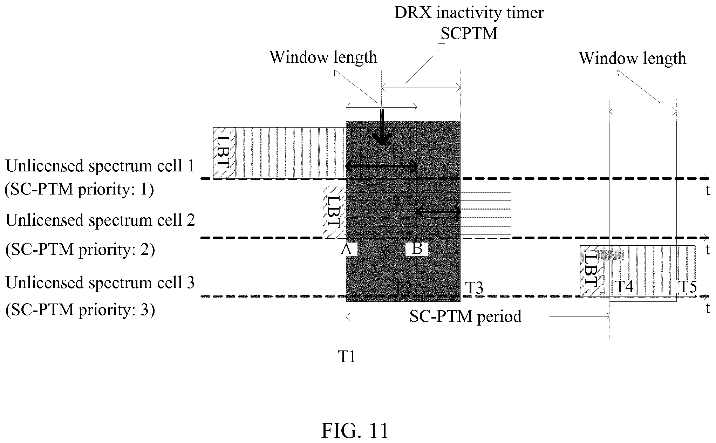

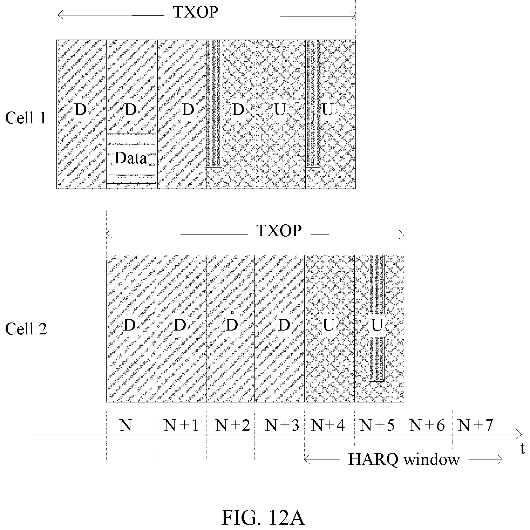

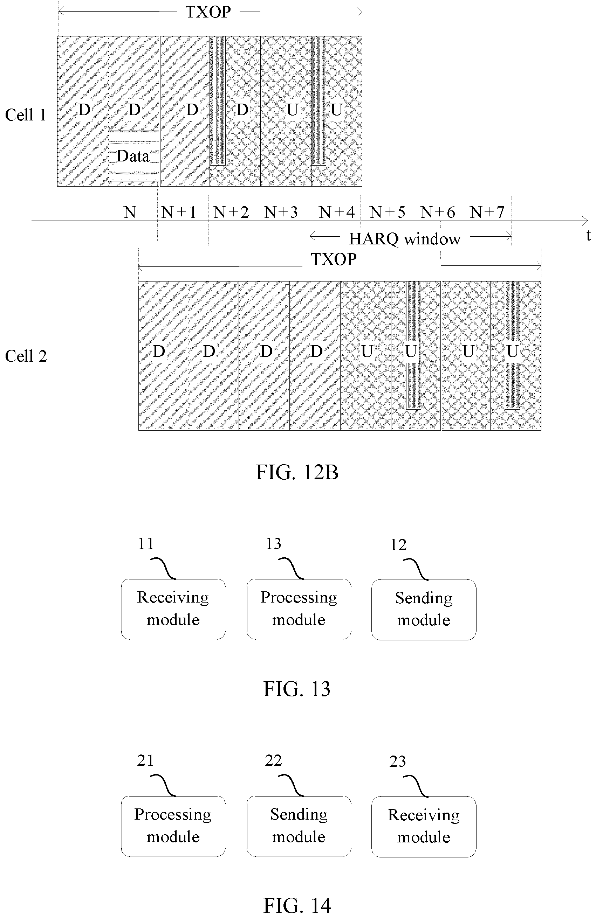

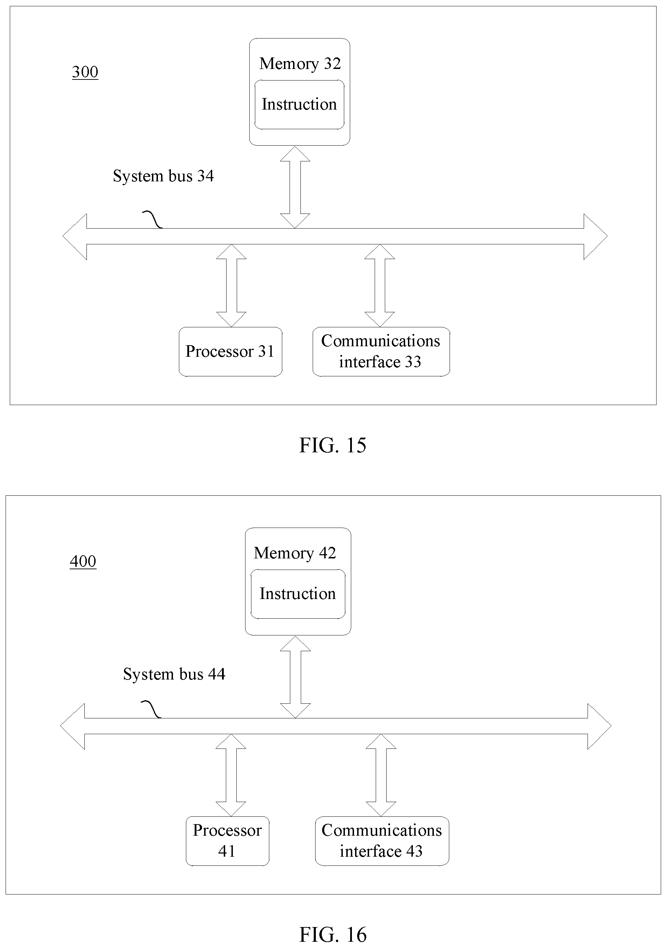

FIG. 2 is a flowchart of Embodiment 1 of an uplink information transmission method according to the present invention;

## Claims

1. An uplink information transmission method, comprising:
receiving, by user equipment UE, configuration information sent by a base station, wherein the configuration information indicates a cell group configured for the UE by the base station; and
sending (103), by the UE, uplink information to the base station by using the cell group;
wherein the uplink information comprises uplink information of a first cell, and the sending, by the UE, uplink information to the base station by using the cell group comprises:
determining (201), by the UE, whether a second cell is an available unlicensed spectrum cell; and
if the second cell is an available unlicensed spectrum cell:
sending, by the UE, the uplink information of the first cell to the base station by using the second cell; wherein
the first cell is a cell in the cell group, and a second cell is another cell different from the first cell in the cell group.

2. The method according to claim 1, wherein. if the second cell is an available unlicensed spectrum cell, the sending, by the UE, the uplink information of the first cell to the base station by using a second cell comprises:
Starting (206), by the UE, a window timer at a time point of sending the uplink information of the first cell;
detecting, by the UE during running of the window timer, that the second cell is an available unlicensed spectrum cell; and
sending, by the UE, the uplink information of the first cell to the base station by using the second cell.

3. The method according to claim 1, wherein the method further comprises:
if the second cell is an unavailable unlicensed spectrum cell:
determining (203), by the UE, that there is at least one available alternative cell to the second cell; and
sending, by the UE, the uplink information of the first cell to the base station by using the available alternative cell to the second cell.

4. An uplink information transmission method, comprising:
Configuring (101), by a base station, a cell group for user equipment UE;
sending (102), by the base station, configuration information to the UE, wherein the configuration information indicates the cell group; and
receiving, by the base station, uplink information sent by the UE by using the cell group;
wherein the uplink information comprises uplink information of a first cell, and the receiving, by the base station, uplink information sent by the UE by using the cell group comprises:
determining, by t the UE whether the second cell is an available unlicensed spectrum cell; and
if the second cell is an available unlicensed spectrum cell:
receiving, by the base station, the uplink information of the first cell sent by the UE by using a second cell; wherein
the first cell is a cell in the cell group, and the second cell is another cell different from the first cell in the cell group..

5. The method according to claim 4, wherein the method further comprises:
if the second cell is an unavailable unlicensed spectrum cell
receiving, by the base station, the uplink information of the first cell sent by the UE by using an available alternative cell of the second cell, wherein the available alternative cell is determined by the UE from at least one alternative cell of the second cell after the UE determines that the second cell is an unavailable unlicensed spectrum cell.

6. User equipment, comprising:
a receiving module (11), configured to receive configuration information sent by a base station, wherein the configuration information indicates a cell group configured for the UE by the base station; and
a sending module (12), configured to send uplink information to the base station by using the cell group;
wherein the uplink information comprises uplink information of a first cell
a processing module (13), configured to determine, before the sending module sends the uplink information of the first cell to the base station by using the second cell, whether the second cell is an available unlicensed spectrum cell; and
if the second cell is an available unlicensed spectrum cell:
the sending module (12) is specifically configured to send the uplink information of the first cell to the base station by using a second cell
wherein the first cell is a cell in the cell group, and the second cell is another cell different from the first cell in the cell group..

7. The user equipment according to claim 6, wherein if the second cell is an available unlicensed spectrum cell:
the sending module (12) is configured to send the uplink information of the first cell to the base station by using the second cell, when the processing module detects, during running of a window timer that is started at a time point of sending the uplink information of the first cell, that the second cell is an available unlicensed spectrum cell.

8. The user equipment according to claim 6, wherein if the second cell is an available unlicensed spectrum cell:
the sending module (12) is configured to send, when the processing module (13) determines that there is an available alternative cell to the second cell, the uplink information of the first cell to the base station by using the available alternative cell of the second cell.

9. A system comprising a user equipment UE according to any of claims 6-8 and a base station, comprising:
a processing module (21), configured to configure a cell group for user equipment UE;
a sending module (22), configured to send configuration information to the UE, wherein the configuration information indicates the cell group; and
a receiving module (23), configured to receive uplink information sent by the UE by using the cell group;
wherein the uplink information comprises uplink information of a first cell; and the receiving module (23) is specifically configured to receive the uplink information of the first cell sent by the UE by using a second cell; wherein
the first cell is a cell in the cell group, and the second cell is another cell different from the first cell in the cell group.

10. The system according to claim 9, wherein the second cell is an unlicensed spectrum cell; and
the receiving module (23) is specifically configured to receive the uplink information of the first cell sent by using the second cell.

11. The system according to claim 9, wherein the second cell is an unlicensed spectrum cell; and
the receiving module (23) is specifically configured to receive the uplink information of the first cell sent by the UE by using an available alternative cell to the second cell,.

## Patentansprüche

1. Verfahren zur Übertragung von Uplink-Informationen, umfassend:
Empfangen, durch ein Benutzergerät, UE, von Konfigurationsinformationen, die durch eine Basisstation gesendet werden, wobei die Konfigurationsinformationen eine Zellgruppe angeben, die für das UE durch die Basisstation konfiguriert ist, und
Senden (103), durch das UE, von Uplink-Informationen an die Basisstation durch Verwenden der Zellgruppe,
wobei die Uplink-Informationen Uplink-Informationen einer ersten Zelle umfassen und das Senden, durch das UE, von Uplink-Informationen an die Basisstation durch Verwenden der Zellgruppe umfasst:
Bestimmen (201), durch das UE, ob eine zweite Zelle eine verfügbare Zelle des unlizenzierten Spektrums ist, und
wenn die zweite Zelle eine verfügbare Zelle des unlizenzierten Spektrums ist:
Senden, durch das UE, der Uplink-Informationen der ersten Zelle an die Basisstation durch Verwenden der zweiten Zelle, wobei
die erste Zelle eine Zelle in der Zellgruppe ist und eine zweite Zelle eine andere Zelle ist, die von der ersten Zelle in der Zellgruppe verschieden ist.

2. Verfahren nach Anspruch 1, wobei, wenn die zweite Zelle eine verfügbare Zelle des unlizenzierten Spektrums ist, das Senden, durch das UE, der Uplink-Informationen der ersten Zelle an die Basisstation durch Verwenden einer zweiten Zelle umfasst:
Starten (206), durch das UE, eines Fenster-Timers zu einem Zeitpunkt des Sendens der Uplink-Informationen der ersten Zelle,
Detektieren, durch das UE während des Ausführens des Fenster-Timers, dass die zweite Zelle eine verfügbare Zelle des unlizenzierten Spektrums ist, und
Senden, durch das UE, der Uplink-Informationen der ersten Zelle an die Basisstation durch Verwenden der zweiten Zelle.

3. Verfahren nach Anspruch 1, wobei das Verfahren ferner umfasst:
wenn die zweite Zelle eine nicht verfügbare Zelle des unlizenzierten Spektrums ist:
Bestimmen (203), durch das UE, dass zumindest eine verfügbar alternative Zelle für die zweite Zelle vorhanden ist, und
Senden, durch das UE, der Uplink-Informationen der ersten Zelle an die Basisstation durch Verwenden der verfügbaren alternativen Zelle für die zweite Zelle.

4. Verfahren zur Übertragung von Uplink-Informationen, umfassend:
Konfigurieren (101), durch eine Basisstation, einer Zellgruppe für ein Benutzergerät, UE;
Senden (102), durch die Basisstation, von Konfigurationsinformationen an das UE,
wobei die Konfigurationsinformationen die Zellgruppe angeben, und
Empfangen, durch die Basisstation, von Uplink-Informationen, die durch das UE durch Verwenden der Zellgruppe gesendet werden,
wobei die Uplink-Informationen Uplink-Informationen einer ersten Zelle umfassen und das Empfangen, durch die Basisstation, von Uplink-Informationen, die durch das UE durch Verwenden der Zellgruppe gesendet werden, umfasst:
Bestimmen, durch das UE, ob die zweite Zelle eine verfügbare Zelle des unlizenzierten Spektrums ist, und
wenn die zweite Zelle eine verfügbare Zelle des unlizenzierten Spektrums ist:
Empfangen, durch die Basisstation, der Uplink-Informationen der ersten Zelle, die durch das UE durch Verwenden einer zweiten Zelle gesendet werden, wobei die erste Zelle eine Zelle in der Zellgruppe ist und die zweite Zelle eine andere Zelle ist, die von der ersten Zelle in der Zellgruppe verschieden ist.

5. Verfahren nach Anspruch 4, wobei das Verfahren ferner umfasst:
wenn die zweite Zelle eine nicht verfügbare Zelle des unlizenzierten Spektrums ist, Empfangen, durch die Basisstation, der Uplink-Informationen der ersten Zelle, die durch das UE durch Verwenden einer verfügbaren alternativen Zelle der zweiten Zelle gesendet werden, wobei die verfügbare alternative Zelle durch das UE aus zumindest einer alternativen Zelle der zweiten Zelle bestimmt wird, nachdem das UE bestimmt,
dass die zweite Zelle eine nicht verfügbare Zelle des unlizenzierten Spektrums ist.

6. Benutzergerät, umfassend:
ein Empfangsmodul (11), das dazu konfiguriert ist, Konfigurationsinformationen zu empfangen, die durch eine Basisstation gesendet werden, wobei die Konfigurationsinformationen eine Zellgruppe angeben, die für das UE durch die Basisstation konfiguriert ist, und
ein Sendemodul (12), das dazu konfiguriert ist, Uplink-Informationen an die Basisstation durch Verwenden der Zellgruppe zu senden,
wobei die Uplink-Informationen Uplink-Informationen einer ersten Zelle umfassen,
ein Verarbeitungsmodul (13), das dazu konfiguriert ist, zu bestimmen, bevor das Sendemodul die Uplink-Informationen der ersten Zelle an die Basisstation durch Verwenden der zweiten Zelle sendet, ob die zweite Zelle eine verfügbare Zelle des unlizenzierten Spektrums ist; und
wenn die zweite Zelle eine verfügbare Zelle des unlizenzierten Spektrums ist:
das Sendemodul (12) insbesondere dazu konfiguriert ist, die Uplink-Informationen der ersten Zelle an die Basisstation durch Verwenden einer zweiten Zelle zu senden,
wobei die erste Zelle eine Zelle in der Zellgruppe ist und die zweite Zelle eine andere Zelle ist, die von der ersten Zelle in der Zellgruppe verschieden ist.

7. Benutzergerät nach Anspruch 6, wobei, wenn die zweite Zelle eine verfügbare Zelle des unlizenzierten Spektrums ist:
das Sendemodul (12) dazu konfiguriert ist, die Uplink-Informationen der ersten Zelle an die Basisstation durch Verwenden der zweiten Zelle zu senden, wenn das Verarbeitungsmodul, während des Ausführens eines Fenster-Timers, der zu einem Zeitpunkt des Sendens der Uplink-Informationen der ersten Zelle gestartet wird, detektiert, dass die zweite Zelle eine verfügbare Zelle des unlizenzierten Spektrums ist.

8. Benutzergerät nach Anspruch 6, wobei, wenn die zweite Zelle eine verfügbare Zelle des unlizenzierten Spektrums ist:
das Sendemodul (12) dazu konfiguriert ist, wenn das Verarbeitungsmodul (13) bestimmt, dass eine verfügbare alternative Zelle für die zweite Zelle vorhanden ist, die Uplink-Informationen der ersten Zelle durch Verwenden der verfügbaren alternativen Zelle der zweiten Zelle an die Basisstation zu senden.

9. System, umfassend ein Benutzergerät, UE, nach einem der Ansprüche 6-8 und eine Basisstation, umfassend:
ein Verarbeitungsmodul (21), das dazu konfiguriert ist, eine Zellgruppe für ein Benutzergerät, UE, zu konfigurieren;
ein Sendemodul (22), das dazu konfiguriert ist, Konfigurationsinformationen an das UE zu senden, wobei die Konfigurationsinformationen die Zellgruppe angeben, und
ein Empfangsmodul (23), das dazu konfiguriert ist, Uplink-Informationen, die durch das UE durch Verwenden der Zellgruppe gesendet werden, zu empfangen,
wobei die Uplink-Informationen Uplink-Informationen einer ersten Zelle umfassen und das Empfangsmodul (23) insbesondere dazu konfiguriert ist, die Uplink-Informationen der ersten Zelle, die durch das UE durch Verwenden einer zweiten Zelle gesendet werden, zu empfangen, wobei
die erste Zelle eine Zelle in der Zellgruppe ist und die zweite Zelle eine andere Zelle ist, die von der ersten Zelle in der Zellgruppe verschieden ist.

10. System nach Anspruch 9, wobei die zweite Zelle eine Zelle des unlizenzierten Spektrums ist und
das Empfangsmodul (23) insbesondere dazu konfiguriert ist, die Uplink-Informationen der ersten Zelle, die durch Verwenden der zweiten Zelle gesendet werden, zu empfangen.

11. System nach Anspruch 9, wobei die zweite Zelle eine Zelle des unlizenzierten Spektrums ist und
das Empfangsmodul (23) insbesondere dazu konfiguriert ist, die Uplink-Informationen der ersten Zelle, die durch das UE durch Verwenden einer verfügbaren alternativen Zelle für die zweite Zelle gesendet werden, zu empfangen.

## Revendications

1. Procédé de transmission d'informations de liaison montante, comprenant :
la réception, par un équipement utilisateur UE, d'informations de configuration envoyées par une station de base, dans lequel les informations de configuration indiquent un groupe de cellules configuré pour l'UE par la station de base ; et
l'envoi (103), par l'UE, d'informations de liaison montante à la station de base en utilisant le groupe de cellules ;
dans lequel les informations de liaison montante comprennent des informations de liaison montante d'une première cellule, et l'envoi, par l'UE, d'informations de liaison montante à la station de base en utilisant le groupe de cellules comprend :
la détermination (201), par l'UE, du fait qu'une seconde cellule est, ou n'est pas, une cellule de spectre sans licence disponible ; et
si la seconde cellule est une cellule de spectre sans licence disponible :
l'envoi, par l'UE, des informations de liaison montante de la première cellule à la station de base en utilisant la seconde cellule ; dans lequel
la première cellule est une cellule dans le groupe de cellules, et une seconde cellule est une autre cellule différente de la première cellule dans le groupe de cellules.

2. Procédé selon la revendication 1, dans lequel, si la seconde cellule est une cellule de spectre sans licence disponible, l'envoi, par l'UE, des informations de liaison montante de la première cellule à la station de base en utilisant une seconde cellule comprend :
le démarrage (206), par l'UE, d'une minuterie de fenêtre à un instant de l'envoi des informations de liaison montante de la première cellule ;
la détection, par l'UE durant le fonctionnement de la minuterie de fenêtre, que la seconde cellule est une cellule de spectre sans licence disponible ; et
l'envoi, par l'UE, des informations de liaison montante de la première cellule à la station de base en utilisant la seconde cellule.

3. Procédé selon la revendication 1, le procédé comprenant en outre :
si la seconde cellule est une cellule de spectre sans licence non disponible :
la détermination (203), par l'UE, qu'il existe au moins une autre cellule disponible différente de la seconde cellule ; et
l'envoi, par l'UE, des informations de liaison montante de la première cellule à la station de base en utilisant l'autre cellule disponible différente de la seconde cellule.

4. Procédé de transmission d'informations de liaison montante, comprenant :
la configuration (101), par une station de base, d'un groupe de cellules pour un équipement utilisateur UE ;
l'envoi (102), par la station de base, d'informations de configuration à l'UE, dans lequel les informations de configuration indiquent le groupe de cellules ; et
la réception, par la station de base, d'informations de liaison montante envoyées par l'UE en utilisant le groupe de cellules ;
dans lequel les informations de liaison montante comprennent des informations de liaison montante d'une première cellule, et la réception, par la station de base,
d'informations de liaison montante envoyées par l'UE en utilisant le groupe de cellules comprend :
la détermination, par l'UE, du fait que la seconde cellule est, ou n'est pas, une cellule de spectre sans licence disponible ; et
si la seconde cellule est une cellule de spectre sans licence disponible :
la réception, par la station de base, des informations de liaison montante de la première cellule envoyées par l'UE en utilisant une seconde cellule ; dans lequel la première cellule est une cellule dans le groupe de cellules, et la seconde cellule est une autre cellule différente de la première cellule dans le groupe de cellules.

5. Procédé selon la revendication 4, le procédé comprenant en outre :
si la seconde cellule est une cellule de spectre sans licence non disponible la réception, par la station de base, des informations de liaison montante de la première cellule envoyées par l'UE en utilisant une autre cellule disponible de la seconde cellule,
dans lequel l'autre cellule disponible est déterminée par l'UE à partir d'au moins une autre cellule de la seconde cellule après que l'UE détermine que la seconde cellule est une cellule de spectre sans licence non disponible.

6. Équipement utilisateur, comprenant :
un module de réception (11), configuré pour recevoir des informations de configuration envoyées par une station de base, dans lequel les informations de configuration indiquent un groupe de cellules configuré pour l'UE par la station de base ; et
un module d'envoi (12), configuré pour envoyer des informations de liaison montante à la station de base en utilisant le groupe de cellules ;
dans lequel les informations de liaison montante comprennent des informations de liaison montante d'une première cellule
un module de traitement (13), configuré pour déterminer, avant que le module d'envoi envoie les informations de liaison montante de la première cellule à la station de base en utilisant la seconde cellule, si la seconde cellule est une cellule de spectre sans licence disponible ; et
si la seconde cellule est une cellule de spectre sans licence disponible :
le module d'envoi (12) est spécifiquement configuré pour envoyer les informations de liaison montante de la première cellule à la station de base en utilisant une seconde cellule
dans lequel la première cellule est une cellule dans le groupe de cellules, et la seconde cellule est une autre cellule différente de la première cellule dans le groupe de cellules.

7. Équipement utilisateur selon la revendication 6, dans lequel, si la seconde cellule est une cellule de spectre sans licence disponible :
le module d'envoi (12) est configuré pour envoyer les informations de liaison montante de la première cellule à la station de base en utilisant la seconde cellule, lorsque le module de traitement détecte, durant le fonctionnement d'une minuterie de fenêtre qui est démarrée à un instant de l'envoi des informations de liaison montante de la première cellule, que la seconde cellule est une cellule de spectre sans licence disponible.

8. Équipement utilisateur selon la revendication 6, dans lequel, si la seconde cellule est une cellule de spectre sans licence disponible :
le module d'envoi (12) est configuré pour envoyer, lorsque le module de traitement (13) détermine qu'il y a une autre cellule disponible différente de la seconde cellule, les informations de liaison montante de la première cellule à la station de base en utilisant l'autre cellule disponible de la seconde cellule.

9. Système comprenant un équipement utilisateur UE selon l'une quelconque des revendications 6 à 8 et une station de base, comprenant :
un module de traitement (21), configuré pour configurer un groupe de cellules pour l'équipement utilisateur UE ;
un module d'envoi (22), configuré pour envoyer des informations de configuration à l'UE, dans lequel les informations de configuration indiquent le groupe de cellules ; et
un module de réception (23), configuré pour recevoir des informations de liaison montante envoyées par l'UE en utilisant le groupe de cellules ;
dans lequel les informations de liaison montante comprennent des informations de liaison montante d'une première cellule ; et le module de réception (23) est spécifiquement configuré pour recevoir les informations de liaison montante de la première cellule envoyées par l'UE en utilisant une seconde cellule ; dans lequel la première cellule est une cellule dans le groupe de cellules, et la seconde cellule est une autre cellule différente de la première cellule dans le groupe de cellules.

10. Système selon la revendication 9, dans lequel la seconde cellule est une cellule de spectre sans licence ; et
le module de réception (23) est spécifiquement configuré pour recevoir les informations de liaison montante de la première cellule envoyées en utilisant la seconde cellule.

11. Système selon la revendication 9, dans lequel la seconde cellule est une cellule de spectre sans licence ; et
le module de réception (23) est spécifiquement configuré pour recevoir les informations de liaison montante de la première cellule envoyées par l'UE en utilisant une autre cellule disponible différente de la seconde cellule.
